# EUROPÄISCHE PATENTANMELDUNG

(11) **EP 4 086 107 A1**
(43) Veröffentlichungstag der Anmeldung: **09.11.2022**
(21) Anmeldenummer: 22171609.5
(22) Anmeldetag: 04.05.2022
(51) Int. Cl.: B60L 53/12, B60L 53/14, B60L 53/30, H02J 50/80, G08G 1/133

(54) **VERFAHREN UND SYSTEM ZUM BEREITSTELLEN VON FAHRGASTINFORMATIONEN AN EINEM ELEKTROBUS**

(30) Priorität: 06.05.2021 DE 102021111855
(71) Anmelder: MAN Truck & Bus SE, 80995 München (DE)
(72) Erfinder: Hackl, Andreas, 80995 München (DE); Hessel, Marcel, 80995 München (DE)
(74) Vertreter: v. Bezold & Partner Patentanwälte - PartG mbB

(57) **Zusammenfassung**

Die Erfindung betrifft ein Verfahren zum Bereitstellen von Fahrgastinformationsdaten an einen Elektrobus (10), der einen Traktionsenergiespeicher (1), eine Fahrgastinformationsanzeige (2) sowie eine fahrzeugseitige Ladeschnittstelle (3) umfasst. Mittels der fahrzeugseitigen Ladeschnittstelle (3) sollen dabei sowohl Energie für den Traktionsenergiespeicher (1) als auch Fahrgastinformationsdaten für die Fahrgastinformationsanzeige (2) an den Elektrobus (10) übertragbar sein. Das Verfahren umfasst dabei ein Ausbilden einer Übertragungsverbindung (4) zwischen der fahrzeugseitigen Ladeschnittstelle (3) zu einer ladestellenseitigen Ladeschnittstelle (5) sowie ein Übertragen von Fahrgastinformationsdaten an den Elektrobus (10) über die ausgebildete Übertragungsverbindung (4). Weiterhin betrifft die Erfindung ein System aus einem entsprechenden Elektrobus (10) und einer entsprechenden ladestellenseitigen Ladeschnittstelle (5), die zur Durchführung des vorgenannten Verfahrens ausgebildet sind.

## Beschreibung

Die Erfindung betrifft ein Verfahren und ein System zum Bereitstellen von Fahrgastinformationsdaten an einen Elektrobus.

Im Stand der Technik ist es allgemein bekannt, Verkehrsmittel des öffentlichen Personennahverkehrs (z. B. Linienbusse) mit Bildschirmeinrichtungen auszustatten, mittels derer den Fahrgästen Informationen bezüglich Haltestellen, Anschlussmöglichkeiten und/oder Störungen angezeigt werden können. Zusätzlich zu diesen betrieblichen Informationen werden über derartige Bildschirmeinrichtungen oftmals auch Nachrichten, Unterhaltungsbeiträge und/oder Werbung ausgegeben.

Die Anzeigedaten für die Bildschirmeinrichtungen sind dabei in der Regel in einem integrierten Speicher des jeweiligen Fahrzeugs hinterlegt, sodass ein Übertragen bzw. Überspielen der Daten an das entsprechende Fahrzeug erfolgen muss. Der Datenaustausch kann dabei über eine kabelbasierte Verbindung erfolgen, was jedoch aufwendig ist, da dies für jedes Fahrzeug separat erfolgen muss. Zudem oder alternativ dazu ist das Verwenden drahtloser (Funk-)Verbindungen bekannt. Hierbei wird in der Regel eine Mobilfunkverbindung zu einer Leitstelle aufgebaut, über die die entsprechenden Fahrgastinformationsdaten "over the air" an das Fahrzeug übermittelt werden. Nachteilig hieran ist jedoch, dass hierfür eine ausreichende Netzabdeckung sichergestellt sein muss, was in mobilfunkschwachen Regionen oder bei Überlandfahrten von Regionalbussen gegebenenfalls zu Problemen bei der Aktualisierung der Daten führen kann. Da insbesondere Fahrzeuge des Linienverkehrs, wie z. B. Stadtbusse, oftmals auf gegebenenfalls täglich wechselnden Routen eingesetzt werden und damit z. B. die Haltestellen- bzw. Streckeninformationen entsprechend oft aktualisiert werden müssen, besteht hier ein Bedarf an einer Möglichkeit, die entsprechenden Fahrgastinformationsdaten möglichst einfach und zuverlässig an die jeweiligen Fahrzeuge zu übertragen.

Entsprechend ist es Aufgabe der Erfindung, eine derartige Lösung bereitzustellen, mit der möglichst auch die Nachteile der bisherigen Lösungen vermieden werden. Insbesondere ist es eine Aufgabe der Erfindung, eine Lösung für ein Elektrofahrzeug zur Personenbeförderung bereitzustellen, mittels derer ein einfaches und zuverlässiges Bereitstellen von Fahrgastinformationsdaten an das Fahrzeug ermöglicht wird.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Der Grundgedanke der Erfindung ist dabei, den bei Elektrofahrzeugen notwendigen Ladevorgang des Traktionsenergiespeichers zugleich auch für ein entsprechendes Übermitteln der Fahrgastinformationsdaten zu nutzen, wobei sowohl die Datenübertragung als auch die Energie- bzw. Stromübertragung über dieselbe (Lade-)Schnittstelle erfolgen soll. Durch diese "Doppelnutzung" der entsprechenden Schnittstelle können auf vorteilhafte Weise Kommunikationsstrukturen eingespart werden sowie das bei Elektrofahrzeugen ohnehin erforderliche Verbinden zu Ladestationen (z. B. nachts auf dem Betriebshof oder an Schnell-Ladekontakten an Haltestellen) möglichst effektiv auch für ein "Updaten" der Fahrgastinformationsdaten genutzt werden.

Ein erster unabhängiger Lösungsgedanke der Erfindung betrifft dabei ein Verfahren zum Bereitstellen von Fahrgastinformationsdaten an einen Elektrobus. Als Elektrobus - welcher auch als Batteriebus oder E-Bus bezeichnet werden kann - soll dabei ein Omnibus verstanden werden, welcher, vorzugsweise ausschließlich, mittels elektrischer Energie antreibbar ist. Der besagte Elektrobus umfasst einen Traktionsenergiespeicher, eine Fahrgastinformationsanzeige sowie eine Ladeschnittstelle, wobei diese im Folgenden zur besseren Unterscheidbarkeit als "fahrzeugseitige" oder "fahrzeuginterne" Ladeschnittstelle bezeichnet werden soll. Durch die letztgenannten Bezeichnungen soll dabei jedoch lediglich zum Ausdruck gebracht werden, dass die entsprechende Ladeschnittstelle "am Fahrzeug" angeordnet ist, ohne dass hierdurch deren exakter Anbringungsort am Fahrzeug spezifiziert wird. Ferner sollen mittels der entsprechenden fahrzeugseitigen Ladeschnittstelle sowohl, vorzugsweise elektrische, Energie für den Traktionsenergiespeicher als auch Fahrgastinformationsdaten für die Fahrgastinformationsanzeige an den Elektrobus übertragen werden können bzw. übertragbar sein. Mit anderen Worten kann die fahrzeugseitige Ladeschnittstelle sowohl für eine Daten- als auch Energie- bzw. Stromübertragung ausgebildet sein. Lediglich beispielhaft kann dies, wie im Folgenden noch genauer ausgeführt werden wird, z. B. mittels dem in ISO 15118 festgelegten Kommunikationsprotokoll erfolgen.

Weiterhin umfasst das bereitgestellte Verfahren den Schritt des Ausbildens einer Übertragungsverbindung zwischen der fahrzeugseitigen Ladeschnittstelle zu einer ladestellenseitigen Ladeschnittstelle. Als "ladestellenseitige" Ladeschnittstelle, welche auch als "fahrzeugexterne" Ladeschnittstelle bezeichnet werden kann, soll dabei eine gerade nicht am Elektrobus angeordnete Ladeschnittstelle verstanden werden. Lediglich beispielhaft kann sich die ladestellenseitige Ladeschnittstelle an einer Ladesäule oder sonstigen Infrastruktur zum Bereitstellen von Energie bzw. Fahrgastinformationsdaten für das Fahrzeug befinden. Vorzugsweise sollen mittels der ladestellenseitigen Ladeschnittstelle ebenfalls sowohl Energie für den Traktionsenergiespeicher als auch Fahrgastinformationsdaten für die Fahrgastinformationsanzeige an den Elektrobus übertragen werden können bzw. übertragbar sein.

Weiterhin umfasst das Verfahren den Schritt des Übertragens von Fahrgastinformationsdaten an den Elektrobus über die ausgebildete Übertragungsverbindung. Mit anderen Worten ist vorgesehen, dass mittels der Übertragungsverbindung, über welche das Fahrzeug bzw. dessen Traktionsenergiespeicher geladen werden kann, auf vorteilhafte Weise auch entsprechende Fahrgastinformationsdaten an das Fahrzeug übermittelt werden. Lediglich beispielhaft kann dies z. B. mittels der "Powerline Communication"-Technik erfolgen. Vorzugsweise erfolgt zuletzt ein Anzeigen der übertragenen Fahrgastinformationsdaten über die Fahrgastinformationsanzeige. Insgesamt wird durch das vorgenannte Verfahren - neben einer effektiven "Doppelnutzung" der Ladeschnittstelle bzw. der entsprechenden Ladepausen des Elektrofahrzeugs - ein zuverlässiges Bereitstellen individueller Fahrgastinformationsdaten für das jeweilige Fahrzeug ermöglicht, welches nicht auf die lokale Mobilfunknetzabdeckung angewiesen ist.

Gemäß einem ersten Aspekt der Erfindung können die Fahrgastinformationsdaten routenspezifische Fahrgastinformationsdaten sein. Mit anderen Worten können die zu übertragenden Fahrgastinformationsdaten speziell auf eine bestimmte Fahrtroute des jeweiligen Fahrzeugs bezogen sein. Beispielsweise können sich die Fahrgastinformationsdaten unterscheiden, je nachdem, ob der Bus eine Route innerhalb einer Stadt oder eine Route ins entsprechende Umland fährt. Bevorzugt betreffen die routenspezifischen Fahrgastinformationsdaten eine künftig zu fahrende Route des Elektrobusses und/oder einen künftig zu fahrenden Routenabschnitt des Elektrobusses. Die routenspezifischen Fahrgastinformationsdaten können dabei - lediglich beispielhaft-z. B. Haltestellen einer bestimmten Buslinie, Informationen betreffend Sehenswürdigkeiten entlang dieser Buslinie und/oder lokale Werbung bezüglich in der Nähe der Buslinie befindlicher Geschäfte sein. Besonders bevorzugt handelt es sich bei der künftig zu fahrenden Route bzw. dem künftig zu fahrenden Routenabschnitt um eine "als nächstes" und/oder "anschließend" zu fahrenden Route des Elektrobusses bzw. einen "als nächstes" und/oder "anschließend" zu fahrenden Routenabschnitt des Elektrobusses. Auf vorteilhafte Weise wird für jedes Fahrzeug individuell eine bedarfsgerechte Übertragung der Fahrgastinformationsdaten ermöglicht.

Nach einem weiteren Aspekt der Erfindung kann das Verfahren ferner ein Bestimmen einer vom Elektrobus künftig zu fahrende Route und/oder eines künftig zu fahrenden Routenabschnitts umfassen. Das besagte "Bestimmen" kann dabei ein Ermitteln der künftig zu fahrenden Route und/oder des künftig zu fahrenden Routenabschnitts (z. B. anhand aktueller Standortdaten, Fahrpläne und/oder anhand vom Elektrobus selbst bereitgestellter Informationen) beinhalten. Zudem oder alternativ kann das "Bestimmen" auch ein gezieltes Festlegen der künftig zu fahrenden Route und/oder des künftig zu fahrenden Routenabschnitts (z. B. durch die Betriebsleitstelle bzw. den Busbetreiber) umfassen. Weiterhin kann das Verfahren ein Festlegen der zu übertragenden routenspezifischen Fahrgastinformationsdaten auf Grundlage der bestimmten künftig zu fahrenden Route und/oder des bestimmten künftig zu fahrenden Routenabschnitts umfassen. Mit anderen Worten können die zu übertragenden routenspezifischen Fahrgastinformationsdaten anhand der zuvor bestimmten künftig zu fahrenden Route und/oder des bestimmten künftig zu fahrenden Routenabschnitts vorgegeben werden. Beispielsweise kann auf dem Betriebshof zunächst die vom jeweiligen Fahrzeug als Nächstes zu fahrende Route bestimmt werden (z. B. "Linie 3") und anschließend die speziell für diese Route anzuzeigenden routenspezifischen Fahrgastinformationsdaten (z. B. Anschlussmöglichkeiten an der Haltestelle 2 der Linie 3) vorgegeben werden, welche sodann über die vorgenannte Übertragungsverbindung an das Fahrzeug übertragen werden. Dadurch wird ebenfalls auf vorteilhafte Weise wiederum eine bedarfsgerechte fahrzeugspezifische Übertragung der Fahrgastinformationsdaten ermöglicht.

Gemäß einem weiteren Aspekt der Erfindung können die routenspezifischen Fahrgastinformationsdaten zumindest eine Angabe zu Haltestellen, Anschlussmöglichkeiten und/oder Streckendaten umfassen. Zudem oder alternativ können die routenspezifischen Fahrgastinformationsdaten zumindest eine Angabe zu Störungen, Verkehrsdaten, Warnungen (z. B. Ad-hoc-Meldungen), Nachrichten und/oder Veranstaltungen umfassen. Zudem oder alternativ können die routenspezifischen Fahrgastinformationsdaten auch zumindest eine Angabe zu Werbung und/oder Unterhaltungsinhalten umfassen.

Nach einem weiteren Aspekt der Erfindung kann die Fahrgastinformationsanzeige zumindest zwei Bildschirmeinrichtungen umfassen, welche im Folgenden für eine bessere Unterscheidbarkeit als "erste" Bildschirmeinrichtung und "zweite" Bildschirmeinrichtung bezeichnet werden sollen. Beispielsweise kann die erste Bildschirmeinrichtung eine zentral im Fahrgastraum angeordnete Bildschirmeinrichtung sein. Zudem oder alternativ kann die zweite Bildschirmeinrichtung eine einem bestimmten Sitzplatz bzw. Fahrgast zugeordnete Bildschirmeinrichtung sein. Weiterhin können die routenspezifischen Fahrgastinformationsdaten zumindest eine erste Angabe (z. B. eine Angabe zu Haltestellen der Buslinie) und eine zweite Angabe (z. B. eine Angabe zu einer Veranstaltung in der Nähe dieser Buslinie) umfassen. Hierbei kann die erste Angabe (nach deren Übertragung), vorzugsweise ausschließlich, auf der ersten Bildschirmeinrichtung und die zweite Angabe (nach deren Übertragung), vorzugsweise ausschließlich, auf der zweiten Bildschirmeinrichtung angezeigt werden. Mit anderen Worten sollen auf den beiden Bildschirmeinrichtungen unterschiedliche Inhalte bzw. Angaben angezeigt werden. Lediglich beispielhaft kann dabei z. B. die erste Bildschirmeinrichtung als Fahrzielanzeige fungieren, während über die zweite Bildschirmeinrichtung routenspezifische Werbungsinhalte angezeigt werden. Auf vorteilhafte Weise kann so eine Individualisierung des Fahrgastbereichs des jeweiligen Fahrzeugs erfolgen.

Gemäß einem weiteren Aspekt der Erfindung können der Schritt des Ausbildens der Übertragungsverbindung und der Schritt des Übertragens von Fahrgastinformationsdaten auf einem Betriebshof zum Abstellen des Elektrobusses erfolgen. Als Betriebshof, welcher auch als Depot bezeichnet werden kann, soll dabei eine Einrichtung verstanden werden, in der Omnibusse, vorzugsweise geschützt, abgestellt und gewartet werden können. Vorzugsweise erfolgen die entsprechenden Schritte dabei während einer Betriebspause des Elektrobusses (z. B. nachts). Als Betriebspause kann dabei ein Zeitraum verstanden werden, in dem das Fahrzeug außer Betrieb genommen wird, d. h. insbesondere länger nicht bewegt wird bzw. das Fahrzeug nicht mit einem Fahrer besetzt ist. Während einer Betriebspause können z. B. auch Reinigungs- und/oder Wartungsarbeiten am Fahrzeug durchgeführt werden. Bevorzugt handelt es sich bei den dabei übertragenen Fahrgastinformationsdaten um sog. "Loop"-Daten, d. h. eine Folge von Fahrgastinformationsdaten, welche während der Fahrt in einer Endlosschleife wiederholt werden.

Zudem oder alternativ kann der Schritt des Ausbildens der Übertragungsverbindung und der Schritt des Übertragens von Fahrgastinformationsdaten auch an einer Haltestelle des öffentlichen Personennahverkehrs, vorzugsweise während einer Haltephase des Elektrobusses, erfolgen. Lediglich beispielhaft kann das Ausbilden der Übertragungsverbindung z. B. mittels Schnell-Ladekontakten an der entsprechenden Haltestelle erfolgen. In diesem Zusammenhang kann als Haltephase ein Zeitraum verstanden werden, in dem das Fahrzeug - im Gegensatz zur Betriebspause - grundsätzlich in Betrieb ist (d. h. eingeschaltet und mit einem Fahrer besetzt), jedoch kurzfristig nicht bewegt wird. Bevorzugt handelt es sich bei den hier übertragenen Fahrgastinformationsdaten um sog. "Subset"-Daten, d. h. eine Folge von Fahrgastinformationsdaten, welche in einen bestehenden Loop integriert werden bzw. einen Teil der entsprechenden Loop-Daten ersetzen. Der Vorteil der beiden vorgenannten Varianten ist dabei, dass so ohnehin notwendige (Lade-)Standzeiten des Fahrzeugs auf effiziente Weise zugleich auch für ein entsprechendes "Updaten" der Fahrgastinformationsdaten genutzt werden können.

Nach einem weiteren Aspekt der Erfindung kann die ladestellenseitige Ladeschnittstelle über eine Datenkommunikationsverbindung (z. B. eine drahtlose Funkverbindung und/oder eine Kabelverbindung) mit einer, vorzugsweise fahrzeugexternen, Leitstelle verbunden sein. Die Leitstelle, welche auch als Betriebsleitstelle bezeichnet werden kann und sich z. B. auf dem Betriebshof des Busbetreibers befinden kann, kann dabei eingerichtet sein, das Übertragen der Fahrgastinformationsdaten zu steuern. Vorzugsweise sind der besagten Leitstelle dabei eine Mehrzahl an Fahrzeugen zugeordnet, wobei über die Leitstelle der Betrieb der Mehrzahl der Fahrzeuge bzw. das Bereitstellen entsprechender Fahrgastinformationsdaten an die Mehrzahl der Fahrzeuge koordiniert wird. Besonders bevorzugt können dabei die vorgenannten Schritte des Bestimmens einer vom Fahrzeug künftig zu fahrenden Route und/oder eines künftig zu fahrenden Routenabschnitts und das Festlegen der zu übertragenden routenspezifischen Fahrgastinformationsdaten auf Grundlage der bestimmten Route und/oder des bestimmten Routenabschnitts durch die Leitstelle erfolgen. Auf vorteilhafte Weise wird so eine zentrale Koordinierung des entsprechenden Bereitstellens von Fahrgastinformationsdaten ermöglicht.

Gemäß einem weiteren Aspekt der Erfindung kann die Leitstelle eine Empfangseinheit umfassen. Vorzugsweise handelt es sich bei der Empfangseinheit um eine Sende-/Empfangseinheit. Die Empfangseinheit kann dabei ausgebildet sein, Drittdaten von einer externen Datenquelle zu empfangen. Als externe Datenquelle soll dabei eine Quelle für Daten verstanden werden, welche sich außerhalb der Leitstelle bzw. außerhalb des Systems aus Leitstelle, Ladeschnittstelle und Elektrobus befindet. Mit anderen Worten soll es sich bei den Drittdaten, welche auch als externe Daten bezeichnet werden können, nicht um interne Daten des Busbetreibers handeln. Lediglich beispielhaft kann es sich bei den Drittdaten von einer externen Datenquelle um Daten handeln, welche von einem Veranstalter und/oder einem nicht mit dem Busbetreiber verbundenen Unternehmen mittels einer (z. B. über einen Web-Browser aufrufbaren) grafischen Benutzeroberfläche eingegeben wurden. Alternativ können die Drittdaten z. B. auch mittels E-Mail oder Cloud-Diensten übermittelt bzw. empfangen werden. Auf vorteilhafte Weise wird dadurch eine einfache Möglichkeit geschaffen, für Dritte eine Modifizierung bzw. Individualisierung der entsprechenden Fahrgastinformationsdaten zu ermöglichen.

Nach einem weiteren Aspekt der Erfindung können die Drittdaten Fahrgastinformationsdaten sein, welche zur besseren Unterscheidung als "kundenspezifische" Fahrgastinformationsdaten bezeichnet werden sollen. Bei den kundenspezifischen Fahrgastinformationsdaten kann es sich z. B. um neu produzierte Inhalte (z. B. einen Hinweis für eine neue Veranstaltung) handeln. Mit anderen Worten können mittels der Drittdaten neue Fahrgastinformationsdaten in das System eingespielt werden. Zudem oder alternativ können die Drittdaten auch eine Änderungsanfrage bezüglich Fahrgastinformationsdaten und/oder eine Auswahl von Fahrgastinformationsdaten umfassen.

Gemäß einem weiteren Aspekt der Erfindung kann das Verfahren den Schritt des Empfangens von Drittdaten von einer externen Datenquelle umfassen. Lediglich beispielhaft kann über eine Internetverbindung eine Werbeanzeige für eine bestimmte Buslinie an die Leitstelle übermittelt werden. Weiterhin kann das Verfahren den Schritt des Festlegens der zu übertragenden routenspezifischen Fahrgastinformationsdaten auf Grundlage der Drittdaten und der bestimmten Route und/oder des bestimmten Routenabschnitts umfassen. Im Fall des obigen Beispiels kann so auf vorteilhafte Weise die entsprechende Werbeanzeige gerade an das Fahrzeug übermittelt werden, welches die entsprechende Linie fährt.

Nach einem weiteren Aspekt der Erfindung kann die Übertragungsverbindung eine drahtlose Übertragungsverbindung sein. Beispielsweise kann die Übertragungsverbindung eine drahtlose Übertragungsverbindung zum induktiven Laden sein, d. h. eine Übertragungsverbindung, die das Prinzip der Induktion nutzt. Besonders bevorzugt ist die drahtlose Übertragungsverbindung dabei eine Übertragungsverbindung zum resonanten Laden.

Alternativ kann die Übertragungsverbindung jedoch auch eine kabelgebundene Übertragungsverbindung (z. B. ein "Mode 3-Ladekabel") sein. Anders ausgedrückt kann die Übertragungsverbindung eine konduktive Übertragungsverbindung sein, d. h., die fahrzeugseitige Ladeschnittstelle und die ladestellenseitige Ladeschnittstelle können über eine physische Leitung zur Energie- bzw. Datenübertragung verbunden sein. Vorzugsweise wird eine kabelgebundene Übertragungsverbindung verwendet, falls das entsprechende Übertragen der Fahrgastinformationsdaten auf dem Betriebshof erfolgt. Hierbei kann die vorgenannte kabelgebundene Übertragungsverbindung zumindest eine gemeinsame Leitung umfassen, über die sowohl die Energie als auch die Fahrgastinformationsdaten übertragen werden. Beispielsweise kann dazu die Technik der "Powerline Communication" genutzt werden. Zudem oder alternativ kann die kabelgebundene Übertragungsverbindung (wie z. B. bei einer CCS- bzw. Typ-2-SteckVerbindung) auch zumindest eine Ladeleitung umfassen, über die nur die Energie übertragen wird, und zumindest eine Signalleitung, über die nur die Fahrgastinformationsdaten übertragen werden. Zur Realisierung des Datenaustauschs zwischen Fahrzeug und ladestellenseitiger Schnittstelle können dabei z. B. die in IEC61851 oder ISO15118 beschriebenen Möglichkeiten der Ladekommunikation genutzt werden, wobei die entsprechenden Methoden hinsichtlich der Verwendung von Fahrgastinformationsdaten anzupassen sind.

Nach einem weiteren Aspekt der Erfindung kann das Bereitstellen von Fahrgastinformationsdaten an den Elektrobus ausschließlich über die Übertragungsverbindung erfolgen. Mit anderen Worten soll das Bereitstellen der entsprechenden Fahrgastinformationsdaten gerade nicht zusätzlich bzw. alternativ über andere, im Fahrzeug gegebenenfalls vorhandene, Kommunikationsschnittstellen erfolgen. Auf vorteilhafte Weise können so Kommunikationsstrukturen im Fahrzeug eingespart werden.

Gemäß einem weiteren Aspekt der Erfindung kann die Fahrgastinformationsanzeige eine Mehrzahl innerhalb eines Fahrgastraums des Elektrobusses verteilter Bildschirmeinrichtungen umfassen. Lediglich beispielhaft kann die Mehrzahl an Bildschirmeinrichtungen z. B. eine zentral im Fahrgastraum angeordnete Bildschirmeinrichtung und eine, einem bestimmten Sitzplatz bzw. Fahrgast zugeordnete, Bildschirmeinrichtung umfassen. Zudem oder alternativ kann die fahrzeugseitige Ladeschnittstelle als eine, vorzugsweise einzelne, Buchse und/oder Baugruppe ausgebildet sein. Beispielsweise kann die fahrzeugseitige Ladeschnittstelle als eine Typ-2-Steckerbuchse ausgebildet sein. Zudem oder alternativ kann auch die ladestellenseitige Ladeschnittstelle als eine, vorzugsweise einzelne, Buchse und/oder Baugruppe ausgebildet sein.

Ferner wird auch ein System zum Bereitstellen von Fahrgastinformationsdaten an einen Elektrobus bereitgestellt. Das System umfasst dabei einen entsprechenden Elektrobus, wobei dieser einen Traktionsenergiespeicher, eine Fahrgastinformationsanzeige und eine fahrzeugseitige Ladeschnittstelle (z. B. in Form einer entsprechenden Ladebuchse) umfasst. Weiterhin ist vorgesehen, dass mittels der fahrzeugseitigen Ladeschnittstelle sowohl Energie für den Traktionsenergiespeicher als auch Fahrgastinformationsdaten für die Fahrgastinformationsanzeige an den Elektrobus übertragen werden können. Neben dem vorgenannten Elektrobus umfasst das System ferner eine ladestellenseitige, d. h. fahrzeugexterne, Ladeschnittstelle. Lediglich beispielhafte kann diese an einer Ladesäule eines Betriebshofs zum Abstellen des Elektrobusses angeordnet sein. Sowohl der Elektrobus als auch die ladestellenseitige Ladeschnittstelle sind dabei ausgebildet, ein Verfahren wie in diesem Dokument beschrieben auszuführen. Mit anderen Worten sollen die in diesem Dokument im Zusammenhang mit dem Verfahren ausgeführten Aspekte auch als im Zusammenhang mit dem eben beschriebenen System offenbart und beanspruchbar sein. Besonders bevorzugt umfasst das System dabei eine Mehrzahl entsprechender Elektrobusse und/oder eine Mehrzahl entsprechender ladestellenseitige Ladeschnittstellen.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung eines Systems aus einem Elektrobus und einer ladestellenseitigen Ladeschnittstelle gemäß einer ersten Ausführungsform der Erfindung;
- Figur 2:: ein Flussdiagramm eines Verfahrens zum Bereitstellen von Fahrgastinformationsdaten an einen Elektrobus gemäß einer Ausführungsform der Erfindung;
- Figur 3:: eine schematische Darstellung eines Systems aus einem Elektrobus und einer ladestellenseitigen Ladeschnittstelle gemäß einer zweiten Ausführungsform der Erfindung; und
- Figur 4:: eine schematische Darstellung eines Systems aus einem Elektrobus und einer ladestellenseitigen Ladeschnittstelle gemäß einer dritten Ausführungsform der Erfindung.

Gleiche oder funktional äquivalente Elemente sind in allen Figuren mit denselben Bezugszeichen beschrieben und zum Teil nicht gesondert beschrieben.

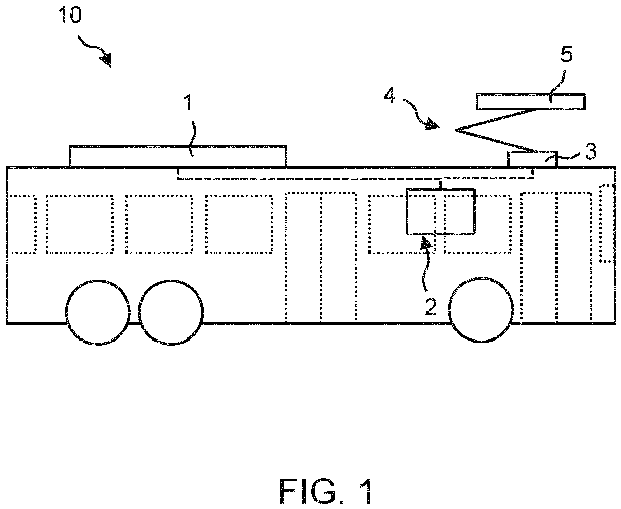

Figur 1 zeigt eine schematische Darstellung eines Systems aus einem Elektrobus 10 und einer ladestellenseitigen Ladeschnittstelle 5 gemäß einer ersten Ausführungsform der Erfindung. Der Elektrobus 10 umfasst dabei einen Traktionsenergiespeicher 1. Bevorzugt soll unter einem Traktionsenergiespeicher 1, welcher auch als Antriebsbatterie oder Hochvoltspeicher bezeichnet werden kann, ein elektrischer Energiespeicher verstanden werden, der zum Antrieb des Elektrofahrzeugs dient bzw. die Elektromotoren des Elektrofahrzeugs mit Energie versorgt. Ferner umfasst der Elektrobus 10 eine Fahrgastinformationsanzeige 2 (z. B. in Form eines oder mehrere Bildschirme) sowie eine fahrzeugseitige, d. h. am Fahrzeug angeordnete, Ladeschnittstelle 3. Gemäß dem allgemeinen Verständnis kann dabei unter einer Schnittstelle eine Verbindungsstelle zwischen Funktionseinheiten verstanden werden, über welche ein Informations- bzw. Energieaustausch erfolgt. Lediglich beispielhaft ist die fahrzeugseitige Ladeschnittstelle 3 hierbei in Form von auf dem Dach des Elektrobusses 10 angebrachter Kontaktschienen ausgeführt. Mittels der fahrzeugseitigen Ladeschnittstelle 3 sollen dabei sowohl Energie für den Traktionsenergiespeicher 1 als auch Fahrgastinformationsdaten für die Fahrgastinformationsanzeige 2 an den Elektrobus 10 übertragen werden können bzw. übertragbar sein.

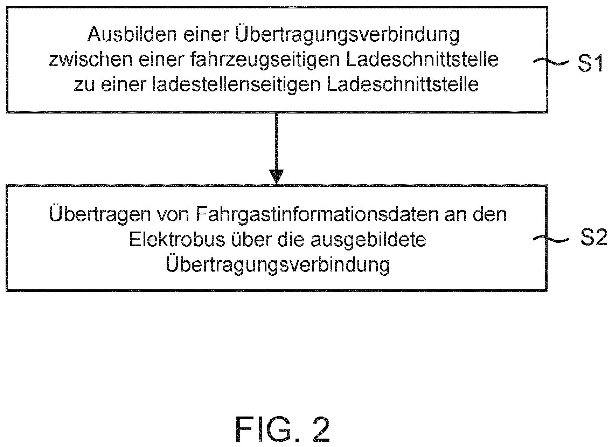

Weiterhin umfasst das System eine ladestellenseitige Ladeschnittstelle 5. Diese ist vorliegend - lediglich beispielhaft - in Form eines zu den Kontaktschienen korrespondierenden beweglichen Stromabnehmers ausgeführt. Bevorzugt sollen mittels der ladestellenseitigen Ladeschnittstelle ebenfalls sowohl Energie für den Traktionsenergiespeicher als auch Fahrgastinformationsdaten für die Fahrgastinformationsanzeige an den Elektrobus übertragen werden können. D. h., mit anderen Worten kann auch die ladestellenseitige Ladeschnittstelle 5 sowohl für eine Übertragung von Energie als auch von Fahrgastinformationsdaten an den Elektrobus 10 ausgebildet sein. Entsprechend können dem Elektrobus 10 so Fahrgastinformationsdaten gemäß einem Verfahren bereitgestellt werden, was nun im Folgenden - unter Bezugnahme auf Figur 2 - näher beschrieben werden soll.

Figur 2 zeigt dazu ein Flussdiagramm eines Verfahrens zum Bereitstellen von Fahrgastinformationsdaten an den entsprechenden Elektrobus 10 gemäß einer Ausführungsform der Erfindung. Im Schritt S1 erfolgt dabei ein Ausbilden einer Übertragungsverbindung 4 zwischen der fahrzeugseitigen Ladeschnittstelle 3 zur ladestellenseitigen Ladeschnittstelle 5. In Bezug auf die zuvor beschriebe Ausführungsform kann dies z. B. durch ein Absenken des Stromabnehmers der ladestellenseitigen Ladeschnittstelle 5 erfolgen, bis dieser in die entsprechenden Kontaktschienen des Elektrobusses 10 einrastet. Bei der vorliegenden - lediglich beispielhaften - Übertragungsverbindung 4 handelt es sich somit um eine konduktive Übertragungsverbindung 4, d. h. eine Übertragungsverbindung 4 in Form einer physischen Leitung. Alternativ dazu kann jedoch auch eine drahtlose Übertragungsverbindung 4 ausgebildet werden. Im Schritt S2 erfolgt sodann ein Übertragen von Fahrgastinformationsdaten an den Elektrobus 10 über die ausgebildete Übertragungsverbindung 4. Mit anderen Worten erfolgt das Übermitteln der entsprechenden Fahrgastinformationsdaten über dieselbe Übertragungsverbindung 4, über die auch ein Laden des Energiespeichers 2 des Elektrobusses 10 erfolgen kann. Lediglich beispielhaft können dabei die z. B. in IEC61851 oder ISO15118 beschriebenen Möglichkeiten der Ladekommunikation genutzt werden, wobei die entsprechenden Methoden hinsichtlich der Verwendung von Fahrgastinformationsdaten anzupassen sind. Bevorzugt erfolgt letztlich ein Anzeigen der übermittelten Fahrgastinformationsdaten auf der Fahrgastinformationsanzeige 2. Dabei kann unter einer Fahrgastinformationsanzeige 2 im Allgemeinen eine Einrichtung (z. B. in Form mehrerer Bildschirme) verstanden werden, die - insbesondere im öffentlichen Personenverkehr-zur Bereitstellung von Informationen an Fahrgäste dient und deren Informationen sich dabei vorrangig nicht an den Fahrer bzw. Fahrzeugführer richten.

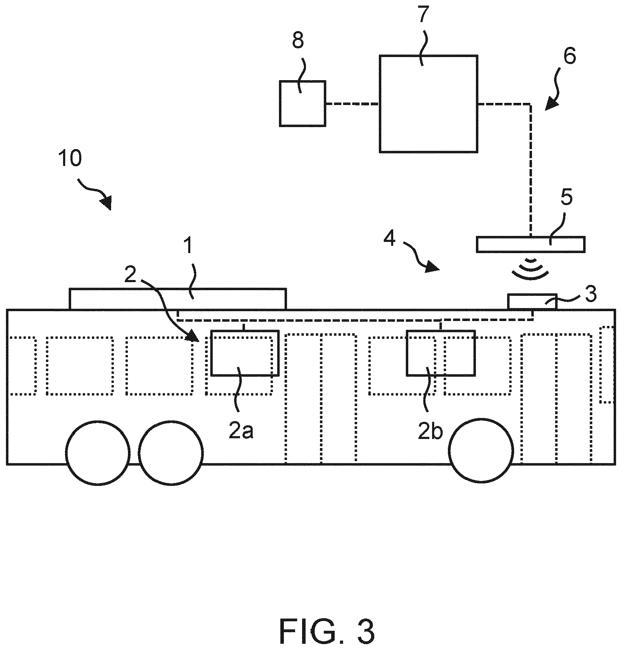

Figur 3 zeigt eine schematische Darstellung eines Systems aus einem Elektrobus 10 und einer ladestellenseitigen Ladeschnittstelle 5 gemäß einer zweiten Ausführungsform der Erfindung. Im Gegensatz zu der in Figur 1 gezeigten Ausführungsform sind die jeweiligen Ladeschnittstellen, d. h. die fahrzeugseitige Ladeschnittstelle 3 und die ladestellenseitige Ladeschnittstelle 5, für ein induktives Laden ausgelegt (z. B. indem sie jeweils über ein, nicht näher dargestelltes, Spulensystem verfügen). Entsprechend ist die Übertragungsverbindung 4 vorliegend eine drahtlose Übertragungsverbindung 4, bei der die Energie- bzw. Fahrgastinformationsdatenübertragung mittels elektromagnetischer (Wechsel-)Felder erfolgt.

Neben dem Unterschied in der Übertragungsverbindung 4 ist die ladestellenseitige Ladeschnittstelle 5 der in Figur 3 dargestellten Ausführungsform zusätzlich über eine Datenkommunikationsverbindung 6 mit einer Leitstelle 7 verbunden, wobei die Leitstelle 7 eingerichtet ist, das Übertragen der Fahrgastinformationsdaten zu steuern. Lediglich beispielhaft kann sich die Leitstelle 7 dabei z. B. auf einem Betriebshof des Busbetreibers befinden. Bevorzugt sind der besagten Leitstelle 7 dabei eine Mehrzahl an Fahrzeugen zugeordnet, wobei über die Leitstelle der Betrieb der Mehrzahl der Fahrzeuge bzw. das Bereitstellen entsprechender Fahrgastinformationsdaten an die Mehrzahl der Fahrzeuge koordiniert wird.

Ferner umfasst die Leitstelle 7 vorliegend eine Empfangseinheit 8, die ausgebildet ist, Drittdaten von einer externen Datenquelle zu empfangen. Lediglich beispielhaft kann es sich bei den Drittdaten einer externen Datenquelle um Daten handeln, welche von einem nicht mit dem Busbetreiber verbundenen Unternehmen z. B. mittels E-Mail übermittelt wurden. Über die Empfangseinheit 8 können somit z. B. neue Fahrgastinformationsdaten in das System eingespielt werden. Beispielsweise kann ein Veranstalter kundenspezifische Fahrgastinformationsdaten in Form eines Hinweises auf eine kommende Veranstaltung an die Leitstelle 7 übermitteln, die sodann - gesteuert von der Leitstelle 7 - an den entsprechenden Elektrobus 10 übertragen werden können. Auf vorteilhafte Weise wird dadurch eine einfache Möglichkeit geschaffen, für Dritte eine Modifizierung bzw. Individualisierung der entsprechenden Fahrgastinformationsdaten zu ermöglichen.

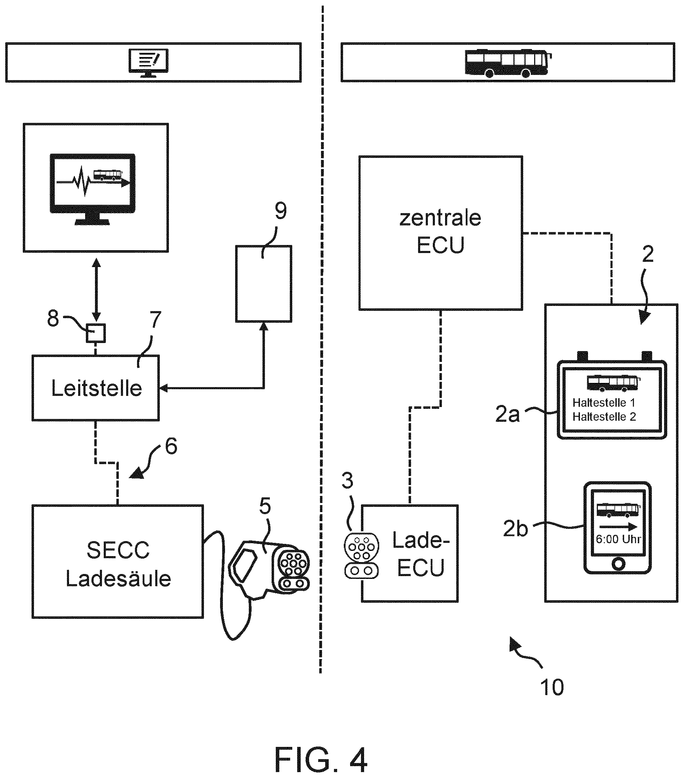

Figur 4 zeigt eine schematische Darstellung eines Systems aus einem Elektrobus 10 und einer ladestellenseitigen Ladeschnittstelle 5 gemäß einer dritten Ausführungsform der Erfindung. Im Gegensatz zu den vorherigen Darstellungen, bei welchen vorrangig die konstruktive Ausgestaltung der entsprechenden Komponenten im Mittelpunkt stand, liegt der Fokus der schematischen Darstellung von Figur 4 auf der Verschaltung bzw. Kommunikation der jeweiligen Einheiten. Der Elektrobus 10 umfasst hierbei wiederum eine fahrzeugseitige Ladeschnittstelle 3, welche vorliegend in Form einer Typ-2-Steckerbuchse ausgebildet ist und mittels derer sowohl elektrische Energie (z. B. über die "DC+" bzw. "DC-" Buchse) als auch Fahrgastinformationsdaten (z. B. über die "CP" Buchse) an den Elektrobus 10 übertragbar sind. Die fahrzeugseitige Ladeschnittstelle 3 ist dabei mit einem Lade-Steuergerät verbunden, welches im Folgenden als Lade-ECU ("electronic control unit") bezeichnet werden soll. Die Lade-ECU steht in Kommunikationsverbindung (z. B. über eine CAN- oder Ethernet-Verbindung) mit einem zentralen Fahrzeugsteuergerät (= einer zentralen ECU), das für eine Steuerung und Verteilung der entsprechenden Daten ausgebildet ist. Die zentrale ECU ist wiederum über eine Kommunikationsverbindung (z. B. über eine CAN- oder Ethernet-Verbindung) mit der Fahrgastinformationsanzeige 2 verbunden, welche mehrere Bildschirmeinrichtungen 2a, 2b umfassen kann.

Auf der Seite der Ladestelle bzw. Ladesäule umfasst das System eine ladestellenseitige Ladeschnittstelle 5, welche vorliegend - korrespondierend zur fahrzeugseitige Ladeschnittstelle 3 - in Form einer Typ-2-Kupplung ausgebildet ist. Die ladestellenseitige Ladeschnittstelle 5 ist dabei mit einem Steuergerät der Ladesäule verbunden, welches im Folgenden als SECC ("Supply Equipment Communication Controller") bezeichnet werden soll. Der SECC der Ladesäule ist über eine Datenkommunikationsverbindung 6 mit einer Leitstelle 7 verbunden, wobei die Leitstelle 7 eingerichtet ist, das Übertragen der Fahrgastinformationsdaten zu steuern. Die Leitstelle 7 kann sich dabei z. B. auf einem Betriebshof zum Abstellen des Elektrobusses 10 befinden. Ferner umfasst die Leitstelle 7 vorliegend eine Empfangseinheit 8, die ausgebildet ist, Drittdaten von einer externen Datenquelle zu empfangen, was in Figur 4 durch den entsprechenden Doppelpfeil illustriert werden soll. Zusätzlich zur Kommunikation mit dieser "ersten" externen Datenquelle steht die Leitstelle 7 vorliegend auch mit einer zweiten externen Einrichtung in Form einer Wartungseinrichtung 9 in Kommunikationsverbindung, über welche der Leitstelle 7 z. B. Wartung- und Updateservices zur Verfügung gestellt werden können.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Traktionsenergiespeicher
- 2: Fahrgastinformationsanzeige
- 2a, 2b: Bildschirmeinrichtung
- 3: fahrzeugseitige Ladeschnittstelle
- 4: Übertragungsverbindung
- 5: Ladestellenseitige Ladeschnittstelle
- 6: Datenkommunikationsverbindung
- 7: Leitstelle
- 8: Empfangseinheit
- 9: Wartungseinrichtung
- 10: Elektrobus

## Patentansprüche

1. Verfahren zum Bereitstellen von Fahrgastinformationsdaten an einen Elektrobus (10), wobei der Elektrobus (10) einen Traktionsenergiespeicher (1), eine Fahrgastinformationsanzeige (2) und eine fahrzeugseitige Ladeschnittstelle (3) umfasst; und wobei mittels der fahrzeugseitigen Ladeschnittstelle (3) sowohl Energie für den Traktionsenergiespeicher (1) als auch Fahrgastinformationsdaten für die Fahrgastinformationsanzeige (2) an den Elektrobus (10) übertragen werden können, aufweisend die Schritte:
- Ausbilden einer Übertragungsverbindung (4) zwischen der fahrzeugseitigen Ladeschnittstelle (3) zu einer ladestellenseitigen Ladeschnittstelle (5); und
- Übertragen von Fahrgastinformationsdaten an den Elektrobus (10) über die ausgebildete Übertragungsverbindung (4).

2. Verfahren nach Anspruch 1, **dadurch gekennzeichnet, dass** die Fahrgastinformationsdaten routenspezifische Fahrgastinformationsdaten sind, welche eine künftig zu fahrende Route und/oder einen künftig zu fahrenden Routenabschnitt des Elektrobusses (10) betreffen.

3. Verfahren nach Anspruch 2, **gekennzeichnet durch den Schritt:**
- Bestimmen einer vom Elektrobus (10) künftig zu fahrenden Route und/oder eines künftig zu fahrenden Routenabschnitts; und
- Festlegen der zu übertragenden routenspezifischen Fahrgastinformationsdaten auf Grundlage der bestimmten Route und/oder des bestimmten Routenabschnitts.

4. Verfahren nach Anspruch 2 oder 3, **dadurch gekennzeichnet, dass** die routenspezifischen Fahrgastinformationsdaten zumindest eine Angabe zu
- Haltestellen, Anschlussmöglichkeiten, Streckendaten; und/oder
- Störungen, Verkehrsdaten und/oder Warnungen; und/oder
- Nachrichten und/oder Veranstaltungen; und/oder
- Werbung und/oder Unterhaltungsinhalten umfasst.

5. Verfahren nach Anspruch 4, **dadurch gekennzeichnet, dass** die Fahrgastinformationsanzeige (2) zumindest eine erste und eine zweite Bildschirmeinrichtung (2a, 2b) umfasst und dass die routenspezifischen Fahrgastinformationsdaten zumindest eine erste und eine zweite Angabe umfassen, wobei die erste Angabe auf der ersten Bildschirmeinrichtung (2a) und die zweite Angabe auf der zweiten Bildschirmeinrichtung (2b) angezeigt wird.

6. Verfahren nach einem der vorhergehenden Ansprüche, **dadurch gekennzeichnet, dass** die Schritte des Ausbildens der Übertragungsverbindung (4) und des Übertragens von Fahrgastinformationsdaten
a) auf einem Betriebshof zum Abstellen des Elektrobusses (10), vorzugsweise während einer Betriebspause des Elektrobusses (10), erfolgt; und/oder
b) an einer Haltestelle des öffentlichen Personennahverkehrs, vorzugsweise während einer Haltephase des Elektrobusses (10), erfolgt.

7. Verfahren nach einem der vorhergehenden Ansprüche, **dadurch gekennzeichnet, dass** die ladestellenseitige Ladeschnittstelle (5) über eine Datenkommunikationsverbindung (6) mit einer Leitstelle (7) verbunden ist, wobei die Leitstelle (7) eingerichtet ist, das Übertragen der Fahrgastinformationsdaten zu steuern.

8. Verfahren nach Anspruch 7, **dadurch gekennzeichnet, dass** die Leitstelle (7) eine Empfangseinheit (8) umfasst, die ausgebildet ist, Drittdaten von einer externen Datenquelle zu empfangen.

9. Verfahren nach Anspruch 8, **dadurch gekennzeichnet, dass** die Drittdaten kundenspezifische Fahrgastinformationsdaten, eine Änderungsanfrage bezüglich Fahrgastinformationsdaten und/oder eine Auswahl von Fahrgastinformationsdaten umfasst.

10. Verfahren nach Anspruch 8 oder 9, falls abhängig von Anspruch 3, **gekennzeichnet durch** die Schritte:
- Empfangen von Drittdaten von einer externen Datenquelle; und
- Festlegen der zu übertragenden routenspezifischen Fahrgastinformationsdaten auf Grundlage der Drittdaten und der bestimmten Route und/oder des bestimmten Routenabschnitts.

11. Verfahren nach einem der vorhergehenden Ansprüche, **dadurch gekennzeichnet, dass** die Übertragungsverbindung (4) eine drahtlose Übertragungsverbindung, vorzugsweise eine drahtlose Übertragungsverbindung zum induktiven Laden, ist.

12. Verfahren nach einem der Ansprüche 1 bis 10, **dadurch gekennzeichnet, dass** die Übertragungsverbindung (4) eine kabelgebundene Übertragungsverbindung ist, wobei die kabelgebundene Übertragungsverbindung
a) zumindest eine gemeinsame Leitung umfasst, über die sowohl die Energie als auch die Fahrgastinformationsdaten übertragen werden; oder
b) zumindest eine Ladeleitung, über die nur die Energie übertragen wird, und zumindest eine Signalleitung, über die nur die Fahrgastinformationsdaten übertragen werden, umfasst.

13. Verfahren nach einem der vorhergehenden Ansprüche, **dadurch gekennzeichnet, dass** das Bereitstellen von Fahrgastinformationsdaten an den Elektrobus (10) ausschließlich über die Übertragungsverbindung (4) erfolgt.

14. Verfahren nach einem der vorhergehenden Ansprüche, **dadurch gekennzeichnet,**
a) **dass** die Fahrgastinformationsanzeige (2) eine Mehrzahl innerhalb eines Fahrgastraums des Elektrobusses (10) verteilter Bildschirmeinrichtungen (2a, 2b) umfasst; und/oder
b) **dass** die fahrzeugseitige Ladeschnittstelle (3) als Buchse ausgebildet ist; und/oder
c) **dass** die ladestellenseitige Ladeschnittstelle (5) als Buchse ausgebildet ist.

15. System zum Bereitstellen von Fahrgastinformationsdaten an einen Elektrobus (10), umfassend
- einen Elektrobus (10), wobei der Elektrobus (10) einen Traktionsenergiespeicher (1), eine Fahrgastinformationsanzeige (2) und eine fahrzeugseitige Ladeschnittstelle (3) umfasst; und wobei mittels der fahrzeugseitigen Ladeschnittstelle (3) sowohl Energie für den Traktionsenergiespeicher (1) als auch Fahrgastinformationsdaten für die Fahrgastinformationsanzeige (2) an den Elektrobus (10) übertragen werden können; und
- eine ladestellenseitige Ladeschnittstelle (5);
wobei der Elektrobus (10) und die ladestellenseitige Ladeschnittstelle (5) ausgebildet sind, ein Verfahren nach einem der vorhergehenden Ansprüche auszuführen.
